# EUROPEAN PATENT SPECIFICATION

(11) **EP 0 568 267 B1**
(45) Date of publication and mention of the grant of the patent: **22.01.1997**
(21) Application number: 93303136.1
(22) Date of filing: 22.04.1993
(51) Int. Cl.: B41M 5/40, B41M 5/38

(54) **Thermal transfer materials**
Wärmeempfindliche Übertragungsmaterialien
Matériaux pour le transfert par la chaleur

(30) Priority: 27.04.1992 GB 9209047
(43) Date of publication of application: 03.11.1993
(73) Proprietor: MINNESOTA MINING AND MANUFACTURING COMPANY, St. Paul, Minnesota 55133-3427 (US)
(72) Inventor: Patel, Ranjan C., Essex, CM22 7PP (GB); Mott, Andrew W., Hertfordshire (GB); Thien, Tran V., Harlow, Essex (GB)
(74) Representative: Bowman, Paul Alan

(56) References cited:
- EP-A- 0 482 595
- WO-A-93/01941
- JP-A-63 319 191
- JP-A-63 319 192
- US-A- 4 942 141

## Description

This invention relates to thermal transfer materials and in particular to the use therein of croconium dyes of defined formulae.

Thermal transfer imaging involves the imagewise transfer of colourant from a donor sheet to a receptor under the action of heat, the donor sheet and receptor being maintained in intimate, face-to-face contact throughout. This type of imaging is increasingly popular, mainly because it is "dry" (requiring no chemical development) and therefore compatible with the home or office environment.

Two distinct modes of thermal transfer imaging exist, namely the mass-transfer type, whereby essentially 0% (zero) or 100% transfer of colourant takes place depending on whether the absorbed energy exceeds a threshold value, and the dye-diffusion (sublimation) type, whereby colourant may be transferred to the receptor in an amount proportional to the intensity of the energy absorbed, giving a continuous tone image.

The heat required to effect the transfer of the colourant is usually supplied by contacting the assembled (but not bonded) donor sheet and receptor with so-called "thermal printheads" comprising arrays of miniature electrically-heated elements, each of which is capable of being activated in a timed sequence to provide the desired imagewise pattern of heating. However, such systems provide rather poor resolution and increasing interest is being shown in the use of radiant or projected energy, especially infrared radiation, to supply the heat, thereby taking advantage of the greater commercial availability of laser diodes emitting in the near-infrared region. This is achieved by incorporating a radiation-absorber in the donor and subjecting the same to an imagewise pattern of radiation. When the donor-receptor assembly is irradiated by radiation of an appropriate wavelength, the absorber converts the incident energy to thermal energy and transfers the heat to colourant in its immediate vicinity, causing imagewise transfer of the colourant to the receptor.

Examples of thermal transfer media are disclosed in British Patent Nos. 1385533 and 2083726; European Patent Publication Nos. 403932, 403933, 403934, 404042, 405219, 405296, 407744, 408891, 407907 and 408908; US Patent Nos. 3787210, 3946389, 4541830,4602263, 4788128, 4904572, 4912083, 4942141, 4948776, 4948777, 4948778, 4950639, 4950640, 4952552 and 4973572; International Patent Publication No. PCT WO 88/04237; Japanese Patent Publication Nos. 21-075292 and 30-043294, and Japanese Patent Nos. 51-088016, 56-082293, 63-319191 and 63-319192.

A wide variety of materials have been suggested as the radiation-absorber including pigments, such as carbon black, e.g., as disclosed in British Patent No. 2083726, and a wide range of visible and infrared-absorbing dyes, including: phthalocyanine dyes, e.g., as disclosed in US Patent No. 4788128; ferrous complexes, e.g., as disclosed in US Patent No. 4912083; squarylium dyes, e.g., as disclosed in US Patent No. 4942141; chalcogenopyrylo-arylidene dyes, e.g., as disclosed in US Patent No. 4948776; bis(chalcogenopyrylo)polymethine dyes, e.g., as disclosed in US Patent No. 4948777; oxyindolizine dyes, e.g., as disclosed in US Patent No. 4948778; bis(aminoaryl) polymethine dyes, e.g., as disclosed in US Patent No. 4950639; tetraarylpolymethine dyes; merocyanine dyes, e.g., as disclosed in US Patent No. 4950640; dyes derived from anthraquinones and napthaquinones, e.g., as disclosed in US Patent No. 4952552; cyanine dyes, e.g., as disclosed in US Patent No. 4973572; trinuclear cyanine dyes, e.g., as disclosed in European Patent Publication No. 403933; oxonol dyes, e.g., as disclosed in European Patent Publication No. 403934; indene-bridged polymethine dyes, e.g., as disclosed in European Patent Publication No. 407744, and nickel-dithiolene dye complexes e.g., as disclosed in European Patent Publication No. 408908.

International Patent Publication WO92/09661 discloses the use in laser-addressed imaging materials of squarylium and croconylium dyes in which the end groups comprise chalcogenopyrylium groups. There is no disclosure of dye diffusion or sublimation transfer media, and the main advantage claimed for these dyes is their solubility in semi-polar solvents and plastics.

Japanese Patent Publication No. 63-319191 discloses thermal transfer materials comprising a support having coated sequentially thereon a first layer containing a radiation-absorber and, as an overlayer thereto, a second layer containing a sublimable dye. A single croconium dye having the structure shown below is exemplified amongst over forty different examples of suitable radiation-absorbers. 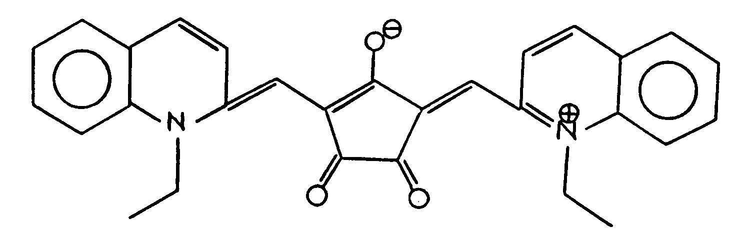 No particular advantage is associated with the use of this dye.

A problem that can arise with thermal transfer materials of the laser-addressable type is co-transfer of the radiation-absorber with the colourant. Since most dyes absorb to some extent in the visible region of the spectrum, any contamination of the transferred image can result in an inaccurate colour rendition.

One solution to the problem is to place the colourant and radiation absorber in separate layers, as taught in Japanese Patent Publication No. 63-319191, but this generally results in reduced sensitivity and hence longer imaging times, which is undesirable.

It has now been found that a particular class of dyes, known as croconium or croconylium dyes, have a reduced tendency to contaminate the transferred image when used as the radiation-absorber in a single layer system.

According to one aspect of the present invention there is provided a donor element for thermal diffusion-transfer imaging having a donor layer comprising both a thermally transferable colourant and, as a radiation-absorber, a croconium dye.

The present invention provides thermal donor materials of the type known as dye-diffusion or dye-sublimation transfer materials, in which radiant or projected energy is converted to heat by the croconium dye is used to effect the transfer of the colourant to a receptor held in contact with the donor material. The amount of dye transferred varies with the amount of radiant energy applied, and hence continuous tone imaging is possible. This is distinct from mass-transfer imaging in which essentially 0% (zero) or 100% transfer of a colourant/binder mixture takes place according to whether or not the applied energy is above a threshold value.

According to a further aspect of the present invention there is provided a method of thermal transfer imaging, which method comprises:
(a) assembling a donor element of the invention and a receptor for thermally transferred colourant such that the donor layer of the donor element is in intimate, face-to-face contact with the receptor, and
(b) imagewise exposing the assembled donor element and receptor, to effect thermal transfer of colourant from the donor element to the receptor in an imagewise fashion.

The term "croconium dye" is used to describe a polymethine dye, in which the polymethine chain includes, as a bridging or rigidising group, a five-membered trioxo ring nucleus incorporating three carbon atoms of the polymethine chain in its ring structure. These dyes have sharp absorbances with high extinction coefficients, because of the electronic properties and rigidising effect of the five-membered ring. Croconium dyes are known, having previously been used as photographic sensitisers, e.g., as disclosed in German Patent No. 1930224 and Japanese Patent No. 58-145936, and in optical data storage, but their use to effect the clean transfer of colourant in thermal transfer imaging has not previously been recognised.

By using croconium dyes as the radiation-absorber, it has been possible to produce single layer thermal transfer materials which have an increased sensitivity when compared with the two layer systems exemplified by Japanese Patent No. 63-319191, and a reduced tendency to contaminate the transferred image as a result of co-transfer of the dye.

Useful croconium dyes have a nucleus represented by general formula (I) below: 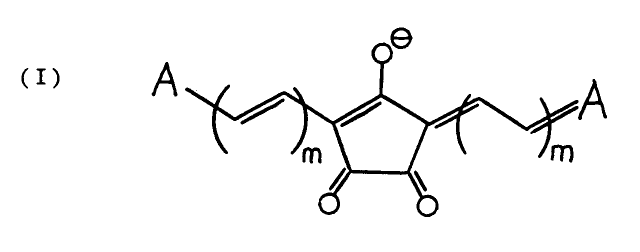 in which;
each A independently represents a carbocyclic or heterocyclic ring or fused ring nucleus or such other terminal groups known to the art of polymethine dye chemistry, and
each m independently represents 0, 1 or 2.

Groups represented by A include pyrylium, thiopyrylium and selenopyrylium rings (and fused-ring derivative thereof); nitrogen - containing heterocycles of the type commonly used in cyanine dye chemistry; and tertiary amino-substitutred aryl and heteroaryl groups.

Preferred croconium dyes within the scope of general formula (I) have a nucleus represented by general formulae (II) or (III) below: 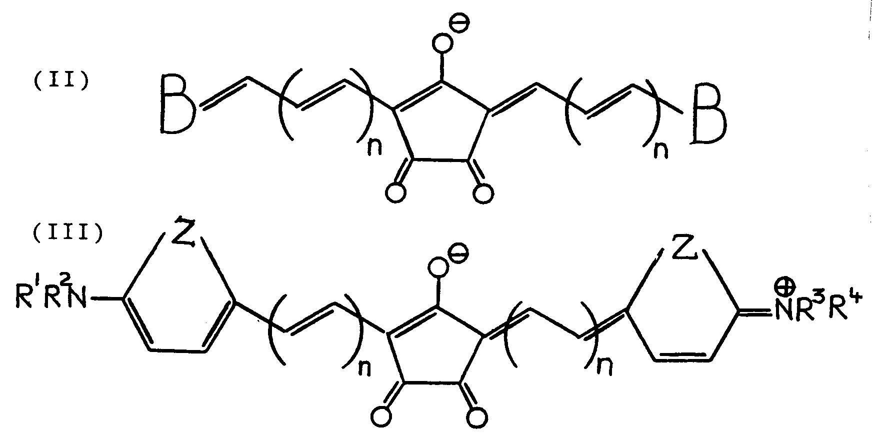
in which;
each B is independently selected from heterocyclic ring and fused ring nuclei of the type known in cyanine dye chemistry,
each Z independently represents the atoms necessary to complete a 5- or 6-membered aromatic or heterocyclic ring,
each n independently represents 0 or 1, and
R¹ to R⁴ are each independently selected from alkyl groups, generally comprising up to 10 carbon atoms, preferably up to 5 carbon atoms, and aryl groups, generally comprising up to 10 carbon atoms, e.g., a phenyl group; or R¹ and R² together and/or R³ and R⁴ together may independently represent those atoms necessary to complete a heterocyclic ring or fused ring nucleus; or R¹ to R⁴ may independently represent the atoms necessary to complete a heterocyclic ring fused to the phenyl ring to which -NR¹R² or -NR³R⁴ is attached.

Z preferably represents -C=C-, S,O,Se or NR¹⁹ in which R¹⁹ is an aralkyl group of up to 5 carbon atoms or an aryl group of up to 10 carbon atoms. Most preferably Z is -C=C- or S.

As is well understood in this technical area, a large degree of substitution is not only tolerated, but is often advisable. As a means of simplifying the discussion and recitation of these groups, the terms "nucleus", "group" and "moiety" are used to differentiate between chemical species that allow for substitution or which may be substituted and those which do not or may not be so substituted. For example, the phrase "alkyl group" is intended to include not only pure hydrocarbon alkyl chains, such as methyl, ethyl, octyl, cyclohexyl, iso-octyl, t-butyl and the like, but also such alkyl chains bearing conventional substituents in the art, such as hydroxyl, alkoxy, phenyl, halogen atoms (F, C1, Br, I), cyano, nitro, amino etc. The phrase "benzothiazolium nucleus" would likewise be understood to include not only an unsubstituted benzothiazolium ring, but also benzothiazolium rings bearing conventional substituents known in the art. The phrase "alkyl moiety" on the other hand is limited to the inclusion of only pure hydrocarbon alkyl chains, such as methyl, ethyl, propyl, cyclohexyl, iso-octyl, t-butyl and the like.

Groups represented by B may comprise any heterocyclic ring or fused ring nucleus suitable for the formation of a cyanine dye. Each B is normally independently selected from nitrogen-containing 5, 6, 7 and 8-membered heterocyclic ring nuclei and heterocyclic fused ring nuclei of up to 14 ring atoms, each of which rings and fused ring nuclei may optionally possess one or more substituents selected from alkyl groups (e.g., methyl, ethyl, isopropyl, etc.), halogen atoms (e.g., fluorine, chlorine, bromine and iodine), a hydroxy group, alkoxy groups (e.g., methoxy, ethoxy, etc.), aryloxy groups (e.g., phenoxy, hydroxyphenoxy, etc.), amino groups (e.g. amino, methylamino, dimethylamino, etc.), a cyano group, acylamino groups (e.g., acetylamino, benzoylamino, etc.), diacyclamino groups (e.g. succinimido, etc.), ureido groups (e.g., methyl-ureido, etc.), sulfonamido groups (e.g., methane-sulfonamido, etc.), acyloxy groups (e.g., acetyloxy, etc.) sulfamoyl groups (e.g., N-ethylsulfamoyl, etc.), alkycarbonyl groups, acrylcarbonyl groups, alkoxycarbonyl groups (e.g., methoxycarbonyl, ethoxycarbonyl, etc.) aryloxycarbonyl groups (e.g., phenoxycarbonyl, etc.) alkoxycarbonyl amino groups (e.g. ethoxycarbonyl-amino, etc.), carbamoyl groups (e.g., N-ethylcarbamoyl, etc.), aryl groups (e.g., phenyl, tolyl, etc.), hydroxyalkyl groups (e.g., hydroxyethyl, hydroxypropyl, etc.), a mercapto group, alkylthio groups, arylthio groups, alkysulfonyl groups, arylsulfonyl groups, acyl groups, aralkyl groups and alkyl groups containing a carboxyl group (e.g., carboxmethyl, carboxyethyl, etc.). Generally, the above defined substituent groups comprise up to 20 carbon atoms, preferably not more than 14 carbon atoms and more preferably not more than 10 carbon atoms.

Examples of preferred nuclei include: oxazolium, thiazolium, selenazolium, benzoxazolium, benzothiazolium, benzoselenazolium, naphthoxazolium, naphthothiazolium, naphthoselenazolium, 2-quinolinium, 4-quinolinium, isoquinolinium, pyridinium, 3H-indolium, naphthindolium, imidazopyridazinium, benzimidazolium, imidazolium and thiodiazolium. Generally the groups represented by each B are identical.

The length of the conjugated polymethine chain is determined by the values of m (Formula I) and n (Formulae II and III). Preferably n is O (zero).

The polymethine chain may optionally be substituted with one or more substituents known to the art of polymethine chemistry, such as halogen atoms, alkyl groups comprising up to 5 carbon atoms, alkoxy groups comprising up to 5 carbon atoms, etc.

Particularly preferred dyes within the scope of general formula (II) have a nucleus represented by general formula (IV) below: 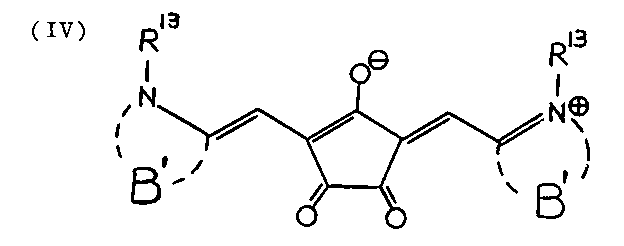 in which:
each B' independently represents those atoms necessary to complete a group represented by B, and each R¹³ independently represents an alkyl group, generally comprising up to 30 carbon atoms, preferably up to 20 carbon atoms, or an aryl group, generally comprising up to 10 carbon atoms, e.g., a phenyl group.

Of the dyes represented by general formula (IV), particularly preferred are dyes having a nucleus represented by general formula (V) below: 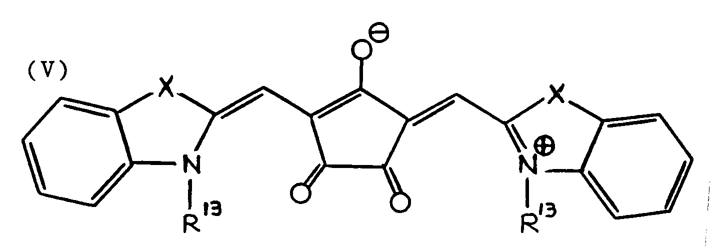 in which;
X represents =C(R¹⁴)₂, =NR¹⁴, O, S or Se where R¹⁴ represents an alkyl group, generally comprising up to 10 carbon atoms, preferably up to 5 carbon atoms, and
R¹³ is as defined previously.

Particularly preferred dyes within the scope of general formula (III) have a nucleus represented by general formulae (V1) and (V11) below: 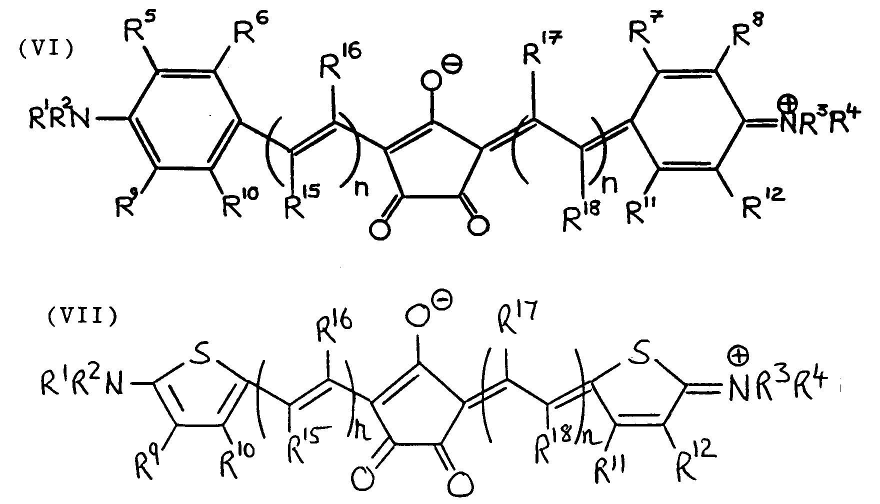 in which;
R⁵ to R¹² and R¹⁵ to R¹⁸ each independently represent hydrogen or a substituent of the type known in polymethine dye chemistry, including those described previously for groups represented by B; or two or more of R¹, R⁵ and R⁶, two or more of R², R⁹ and R¹⁰, two or more of R³, R⁷ and R⁸ and/or two or more of R⁴, R¹¹ and R¹² may together represent those atoms necessary to complete a heterocyclic ring or fused ring nucleus, and
n, R¹, R², R³ and R⁴ are as defined previously.

When n=1 in formulae (V1) and (VII), R¹⁶ and R¹⁷ are preferably phenyl. In formula (V1), preferably one of R⁶ and R¹⁰ and one of R⁷ and R¹¹ is -OH. Examples of croconium dyes suitable for use in the donor elements of the invention are shown in TABLE 1 below.

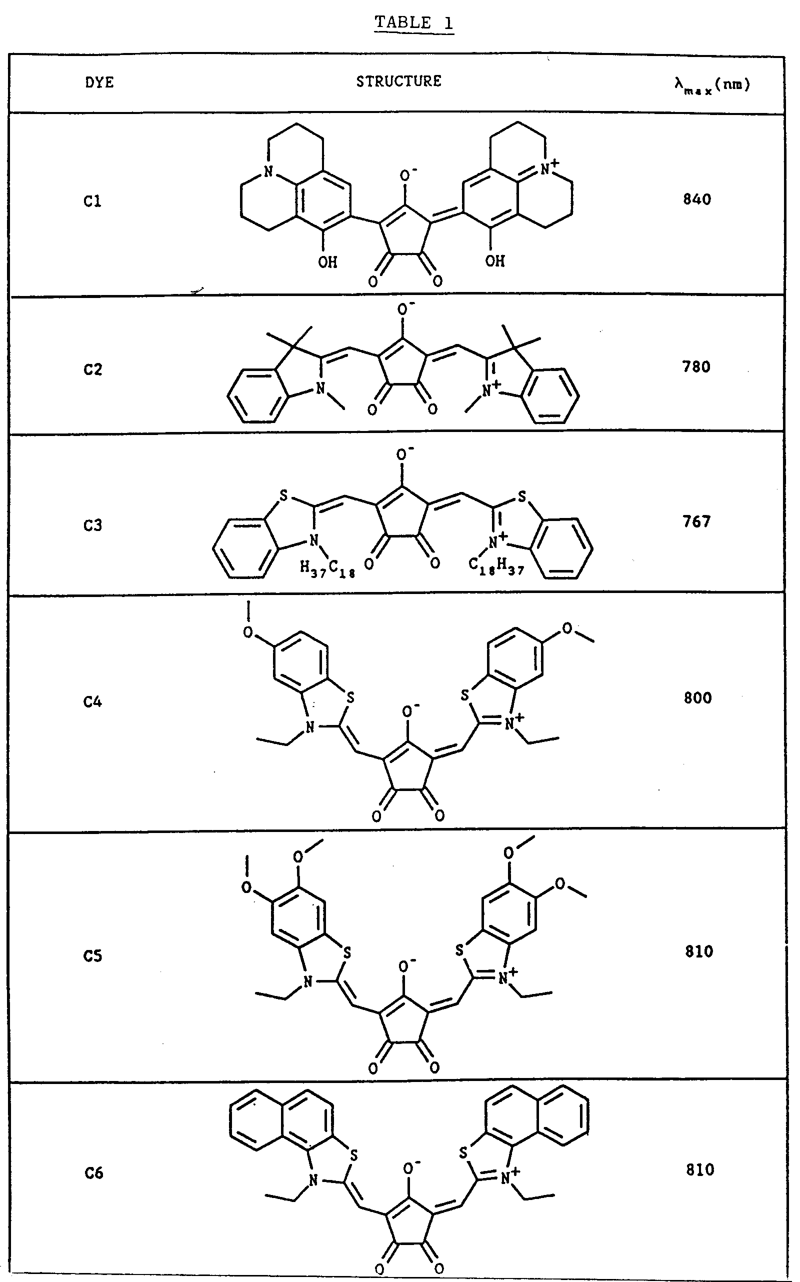

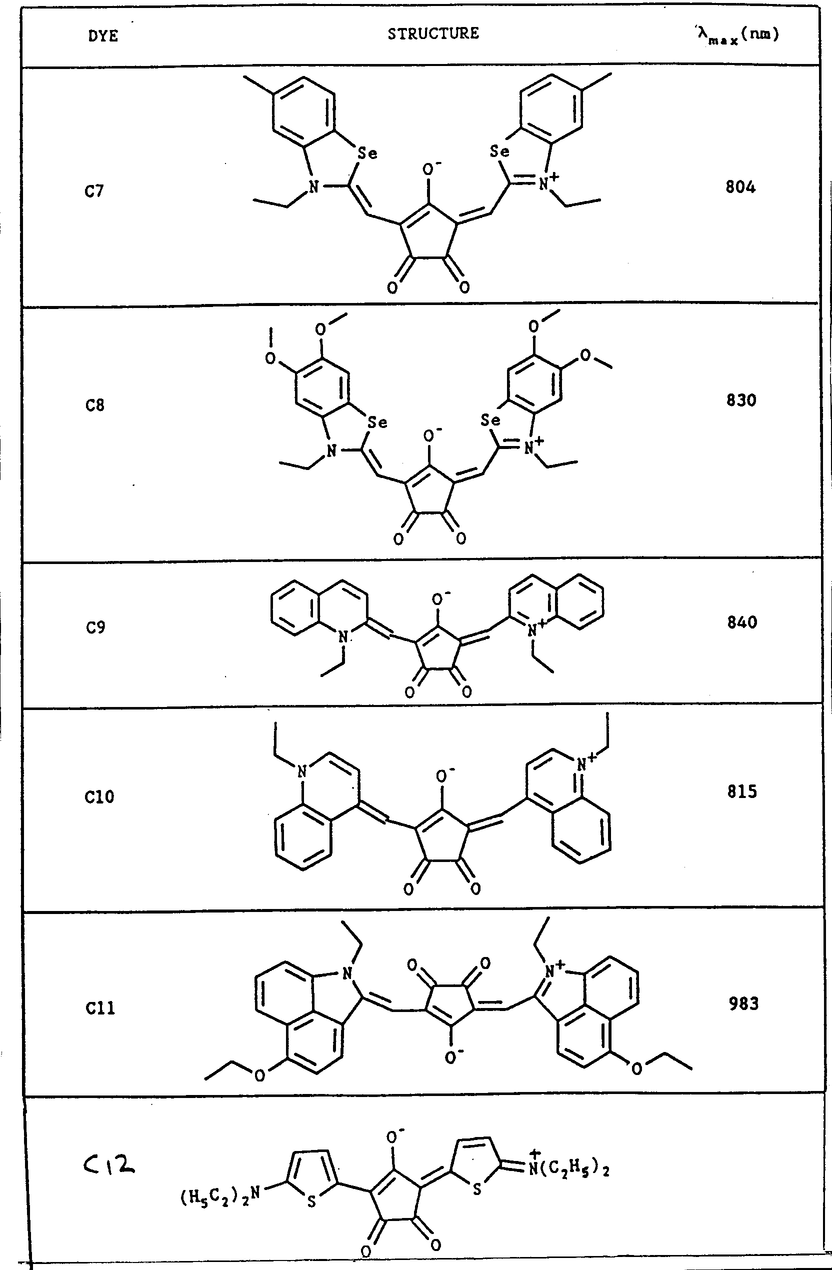

The croconium dyes may be synthesised by procedures described in Germany Patent No. 1930224 and in Dyes and Pigments, 10, pp. 13 to 22 (1988). Dye C12 and related dyes are commercially available from H.W. Sands (N.Y. State).

The croconium dyes may be employed in any concentration which is effective for the intended purpose. Generally, the croconium dyes are present in an amount sufficient to provide the donor layer with a transmission optical density of at least 0.5 absorbance units at the wavelength of the exposing radiation. Preferably, the croconium dye is present in an amount sufficient to provide the donor layer with a transmission optical density of at least 1.0 absorbance units, more preferably 1.5 absorbance units. Good results have been obtained using croconium dyes in amounts of from about 0.05 to about 0.5g/m².

The donor elements of the invention normally comprise a support having coated on at least one major surface thereof the donor layer containing the colourant and the croconium dye, although the donor layer may alternatively comprise a self-supporting film, e.g., as disclosed in our co-pending European Patent Application No. 91311759 filed 18th December, 1991.

The colourant and croconium dye are ordinarily dissolved or dispersed in a polymeric binder. The binder may comprise any of a number of suitable materials, including (but not limited to): poly(vinyl acetals), such as poly(vinyl formal), poly(vinyl butyryl), etc.; a cellulose derivative, such as cellulose acetate hydrogen phthalate, cellulose acetate, cellulose acetate propionate, cellulose acetate butyrate, cellulose triacetate, etc.; polycarbonates; poly(styrene-acrylonitrile); poly(sulfones); poly(phenylene oxide) and poly(vinylidene chloride-vinyl acetate), although binder materials having a glass-transition temperature (Tg) of greater than 100ºC are preferred. The binder is generally used at a coverage of from about 0.1 to about 5g/m².

The donor layer can be coated using any of the coating techniques known in the art, but where the donor layer comprises a mixture of colourant, croconium dye and binder, it is normally coated as a solution or dispersion in a suitable solvent, e.g., lower alcohols, ketones, esters, chlorinated hydrocarbons, and mixtures thereof. Any of the well-known solvent-coating techniques may be used, such as knife-coating, roller-coating, wire-wound bars etc. The thickness of the donor layer must be sufficient to provide the necessary optical density for both the croconium dye and colourant, and will depend on factors such as the extinction coefficient of the colourant/dye, and their solubility in the binder. Relatively thin layers (e.g., up to 5µm dry thickness) are preferred.

Any material can be used as the support for the donor elements of the invention provided it is dimensionally stable and can withstand the heat generated during imaging. The support of the donor sheet ordinarily comprises a transparent substrate, including (but not limited to): polyether sulfones; polyimides, such as polyimide-amides and polyether imides; cellulose esters, such as ethyl cellulose, cellulose acetate, cellulose acetate hydrogen phthalate, cellulose acetate butyrate, cellulose acetate propionate, cellulose triacetate, etc.; poly(vinyl alcohol-vinyl acetal) copolymers; polyesters, such as poly(ethylene terephthalate), poly(ethylene naphthalate), etc.: fluorinated polymers, such as poly(vinylidene fluoride); poly(tetrafluorethylene-hexafluoropropylenes), etc.; polyethers, such as poly(oxyethylene), etc.: polyacetals, such as poly(vinyl formal), poly(vinyl butyryl), etc.; polyolefins, such as poly(ethylene), poly(propylene), poly(styrene), etc., and polyamides, to allow for irradiation of the donor layer by the exposure source. The support generally has a thickness of from about 2 to about 250µm. It may also be coated with a subbing layer, if desired.

Any colourant can be used in the donor layer provided it is transferable by sublimation or diffusion under the action of heat, without decomposing. "Colourant" is used herein in its broadest sense, to encompass any material capable of modifying the surface of a receptor, visibly or otherwise, and which can be transferred by sublimation or diffusion from the donor element to the receptor on heating. Thus the colourant may comprise a compound capable of reacting chemically with some other species already present in the receptor layer, e.g. to form a colour, or to provide some other effect that is useful in an imaging sense.

However, the colourant is normally a thermally-mobile dye. A very large number of these are known in the art of thermal dye transfer, and all are potentially useful in the present invention. Lists of suitable dyes may be found, for example, in US Patent Nos. 4541830, 4698651, 4695287, 4701439, 4757046, 4769360, 4753922, 4973572 and 5017547. Dyes which match the proofing ink references provided by the International Prepress Proofing Association are particularly useful, as disclosed in US Patent No. 5024990. Dye selection is based on a variety of factors, such as the desired hue, stability towards heat and light, extinction coefficient, thermal mobility, etc. Suitable dyes are frequently found in classes such as the azos, tricyanostryryls and anthraquinones, but this is by no means an exhaustive list, and nor would every member of these classes be suitable. Mixtures of dyes may give better results than single dyes, especially eutectic mixtures, as disclosed in US Patent No. 4857503. The dyes are generally used at a coverage of from about 0.05 to about 1g/m², and are preferably hydrophobic.

The donor elements of the invention are intended to be used in combination with a receptor which receives the transferred colourant. The receptor usually comprises a support sheet having coated on at least one major surface thereof a receptor layer, ordinarily comprising a heat-softenable (low Tg, i.e., ≦100^{º}c), usually thermoplastic, binder.

The receptor layer may comprise, for example, a polycarbonate, a polyurethane, a polyester, poly(vinyl chloride), poly(styrene-acrylonitrile), poly(caprolactone), a poly(ethylene-acrylic acid), poly(vinyl-idene chloride-vinyl acetate) or mixtures thereof. The receptor layer may be present in any amount which is effective for the intended purpose, but good results have been obtained at a coverage of from about 1 to about 5g/m².

The support of the receptor can be made of any material to which the receptor layer can be adhered and includes substrates that are smooth or rough, transparent or opaque, flexible or rigid and continuous or sheetlike. A preferred substrate is white-filled or transparent poly(ethylene terephthalate) or opaque paper. Representative examples of materials that are suitable for the substrate include: polyesters, especially poly-ethylene terephthalate) and poly(ethylene naphthalate); polysulfones; polystyrenes; polycarbonates; polyimides; polyamides; cellulose esters, such as cellulose acetate and cellulose butyrate; poly(vinyl chloride), and derivatives thereof. The substrate may also be reflective, such as baryta-coated paper, ivory paper, condenser paper, or synthetic paper. The substrate generally has a thickness of 0.05 to 5mm, with 0.05 to 1mm being preferred.

The substrate may contain fillers, such as titania, zinc oxide and dyes, and may be treated or coated with those materials generally used in the formation of films, such as coating aids, lubricants, antioxidants, ultraviolet radiation absorbers, surfactants and catalysts.

Spacer beads, e.g., as disclosed in US Patent Nos. 4772582 and 4876235 respectively, may be employed in a separate layer over the donor or receptor layer, in order to separate the donor element from the receptor, thereby increasing the uniformity and density of colourant transfer. The spacer beads may be coated with a polymeric binder if desired.

Two distinct methods are known in which radiation is used to effect thermal transfer of a colourant. In the first method, a laser is scanned directly over the donor-receptor assembly, while its intensity is modulated in accordance with digitally stored image information. This method is disclosed in, for example, Japanese Patent No. 51-88016, US Patent No. 4973572, British Patent No. 1433025 and British Patent Publication No. 2083726. Several different kinds of laser may be used to effect the thermal transfer of colourant from the donor to the receptor, including: ion gas lasers, such as argon and krypton lasers; metal vapour lasers, such as copper, gold and cadmium lasers, and solid state lasers. Diode lasers such as gallium arsenide lasers, which offer substantial advantages in terms of their small size, low cost, stability, reliability, ruggedness and ease of modulation are preferred. Lasers emitting radiation in the infrared region from 750 to 980nm are preferred, although lasers emitting outside of this region may also be usefully employed.

The second method involves a flood exposure from a momentary source, such as xenon flash lamp, through a suitable mask held in contact with the donor-receptor assembly. This method is disclosed in, for example, Research Disclosure No. 142223 (February 1976); US Patent Nos. 3828359, 4123309, 4123578 and 4157412, and European Patent No. 365222. The donor elements of the invention may be used with either method, although the former is preferred.

The donor elements of the invention may be used in sheet form or in the form of a continuous roll or ribbon. If a continuous roll or ribbon is employed, the donor element may be monochrome or it may have alternating areas of other different coloured colourants, e.g., cyan and/or magenta and/or yellow and/or black or other colourants. Thus, one, two, three or four (or higher) colour donor elements are included within the scope of the invention.

In a preferred embodiment of the invention, the donor element comprises a poly(ethylene terephthalate) support coated with sequential, repeating areas of cyan, magenta and yellow colourant, each of which also contains a croconium dye, and the above process steps are sequentially performed for each colour to obtain a three-colour image. Of course, when the process is performed for a single colour, then a monochrome image is obtained. After the desired image has been formed on the receptor, it may optionally be transferred to a different substrate, e.g. plain paper stock, by a suitable thermal lamination process, as disclosed, for example, in European Patent Publication No. 454083.

The invention will now be described with reference to the accompanying, non-limiting Examples.

### Example 1

Preparation of Dye C1: 3-hydroxyjulolidine (0.76g) and croconic acid (0.28g) were refluxed, with stirring in a mixture of n-propanol (40ml) and toluene (20ml) for one hour. The water formed was removed azeotropically using a Dean-Stark trap. The mixture was cooled, and the propanol removed by washing with water. The toluene solution was dried over magnesium oxide, passing through silica gel and thus evaporated to yield the dye as dull brown crystals. Yield = 0.8g. Melting Point = 245 to 247°C

Preparation of Dye C2: Dye C2 was prepared according to the protocol disclosed in German Patent No. 1930224.

Preparation of Dye C3: Croconic acid (0.54g) and 2-methyl-3-octadecyl benzthiazolium iodide (4.0g) were dissolved in methanol (10ml) and pyridine (7ml) and heated on a steam bath for 20 minutes. After cooling to room temperature, the product was collected by filtration, washed with methanol and dried. Yield = 3.0g.

### Example 2

Magenta dye M1 (0.2g) and either Dye C1 or Dye C2 (0.02g) were added to a solution of cellulose acetate butyrate (0.1g) in dichloromethane (1g). The resulting solutions were knife coated on to transparent polyester base at 24µm wet thickness to produce Donor Elements 1 & 2, respectively. The transmission optical densities were measured at 1.6 at 890nm (Element 1) and 1.6 at 780nm (Element 2). Both gave an optical density >4.0 at 500nm, corresponding to the magenta dye.

Each element was the placed in face-to-face contact with a Hitachi VY-S100W receptor sheet and irradiated through the donor base by a laser diode (830nm), focused to a 20µm spot and delivering 75mW at the image plane. Successive lines were scanned at various scan speeds in the range 10 to 30cm/second. For both elements, the threshold scan speed for magenta dye transfer was found to be 25cm/second, with the transferred dye density increasing as the scan speed was reduced to 10cm/second.

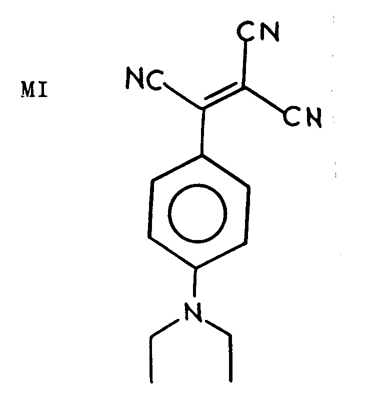

### Example 3

To cellulose acetate butyrate (CAB-500, commercially available from Eastman Kodak) (0.25g) in dichloromethane (10g) was added Dye C3 (0.05g) and magenta dyes M2 (0.025g) and M3 (0.1g); see below. The resulting solution was coated onto transparent polyester base at 50µm wet thickness using a wire-wound bar, and dried for 3 minutes at 50°C to provide Donor Element 3. Donor Element 4 (comparison) was prepared by an identical method except that Dye C3 was replaced by an equal quantity of Dye A. (Dye A is an IR-absorbing polymethine dye within the teaching of US Patent No. 4950639). Laser imaging was carried out as described in Example 2, with a laser power of 100mW and a scan speed of 25cm/second. The transferred images were examined via a microdensitometer using filtered green and red light to test, respectively, for magenta dye density and contaminating IR-dye density. The results were as follows:

| Element | O.D. (green) | O.D. (red) |
|---|---|---|
| 3 | 1.2 | 0.13 |
| 4 | 1.3 | 0.78 |

Thus, both elements showed excellent density of transferred magenta dyes, but Element 3 of the invention showed much less contamination by the laser absorbing dye.

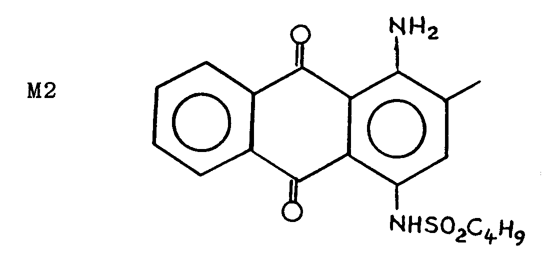

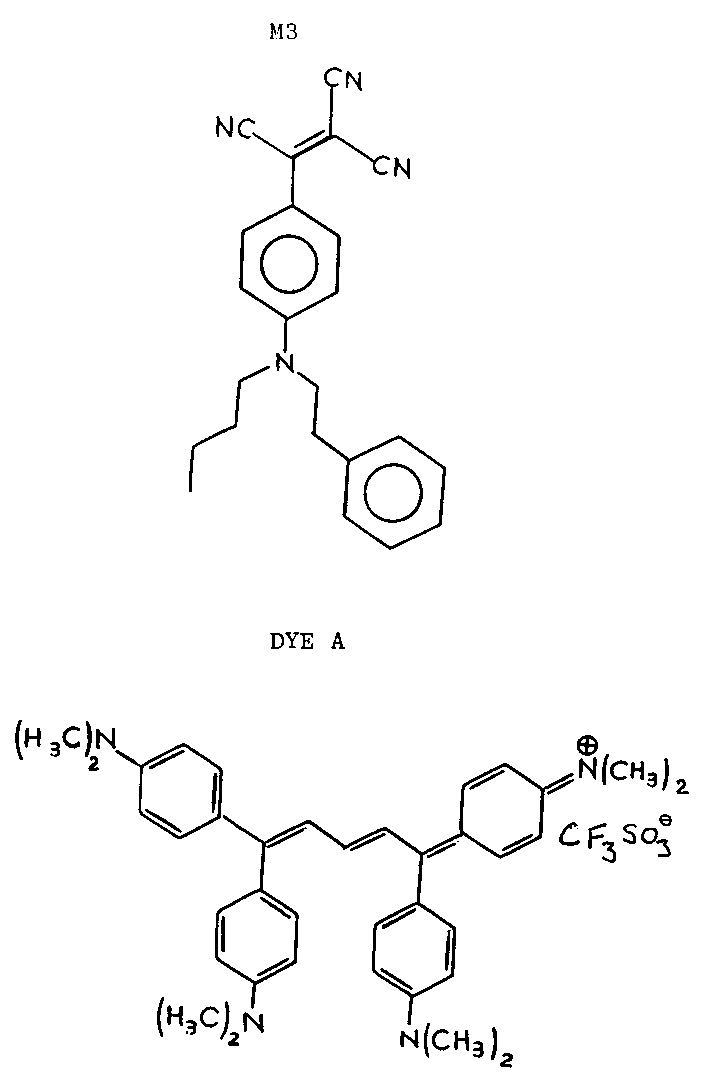

### Example 4

Stock solution A was prepared by homogenizing 12g of a 10% solution of polyvinylbutyral (Butvar B-76) in methylethylketone, 11.3g dichloromethane, 15.8g methylethylketone and 2.3g Aerosil Ox-50.

Stock solution B was made up of 23.5g dichloromethane, 10g methylethylketone and 1.3g dye M2.

A solution was obtained by mixing 3.9g stock solution A, 3.5g stock solution B and 0.15g of a NIR dye from Table 1. The resulting solution was coated onto unsubbed polyester base at 50µm wet thickness using a wire-wound bar, and dried in air to provide a dye donor element. Transmission optical densities measured at 830nm were 0.60, 0.50 and 0.25 for the NIR dyes C5, C6 and C7, respectively.

Each element was placed in face-to-face contact with Hitachi VY-S100W receptor sheet and irradiated on a vacuum drum through the transparent donor base by a laser diode emitting at 830nm, focused to a 20µm spot, delivering 100mW and scanned at 200cm/sec. The results were as follows:

| Dye | OD (red) | OD (green) |
|---|---|---|
| C5 | 0.05 | 0.45 |
| C6 | 0.025 | 0.125 |
| C7 | 0.05 | 0.125 |

## Claims

1. A donor element for thermal diffusion-transfer imaging having a donor layer comprising a thermally transferable colourant and a radiation-absorber characterised in that the radiation-absorber is a croconium dye.

2. A donor element as claimed in Claim 1 characterised in that the croconium dye has a nucleus of general formula (I): 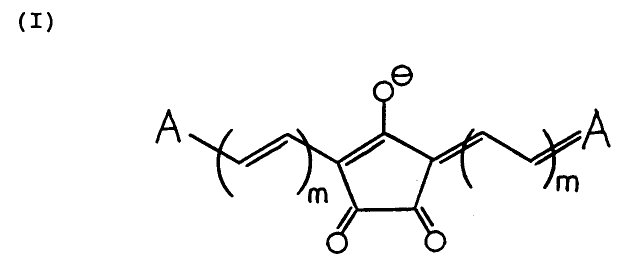 in which;
each A independently represents a carbocylic or heterocyclic ring or fused ring nucleus or such other terminal group known to the art of polymethine dye chemistry, and
each m independently represents 0, 1 or 2

3. A donor element as claimed in Claim 1 or Claim 2 in which the croconium dye has a nucleus of general formula (II) or (III): 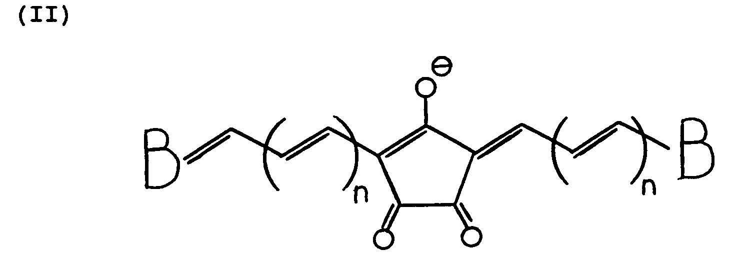 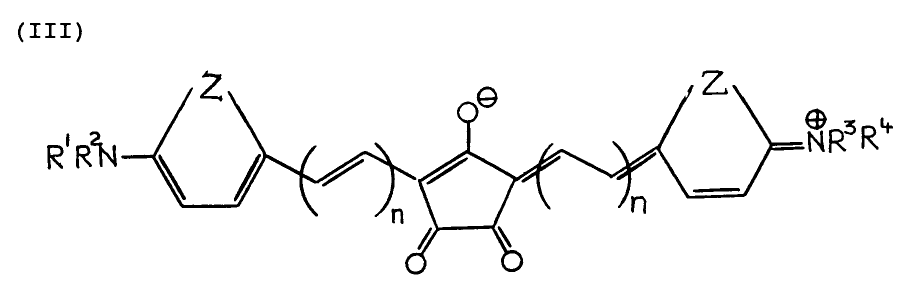 in which,
each B is independently selected from heterocyclic ring and fused ring nuclei of the type known in cyanine dye chemistry,
each Z independently represents the atoms necessary to complete a 5- or 6-membered aromatic or heterocyclic ring,
each n independently represents 0 or 1, and
R¹ to R⁴ are each independently selected from alkyl and aryl groups; or R¹ and R² together and/or R³ and R⁴ together may independently represent the atoms necessary to complete a heterocyclic ring or fused ring nucleus.

4. A donor element as claimed in Claim 3 in which each B is independently selected from oxazolium, thiazolium, selenazolium, benzoxazolium, benzothiazolium, benzoselenazolium, naphthoxazolium, napthothiazolium, naphthoselenazolium, 2-quinolinium, 4-quinolinium, isoquinolinium, pyridinium, 3H-indolium, naphthindolium, imidazopyridazinium, benzimidazolium, imidazolium and thiodiazolium groups.

5. A donor element as claimed in Claim 3 in which the croconium dye has the general formula (IV) (VI) or (VII) 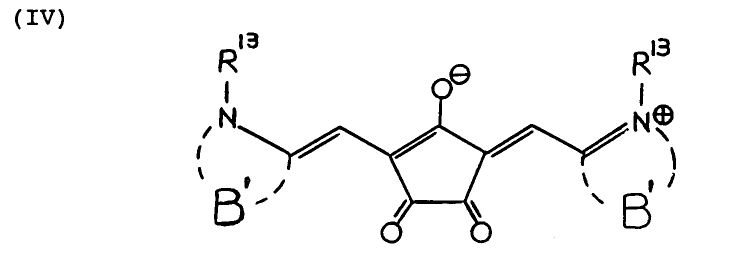 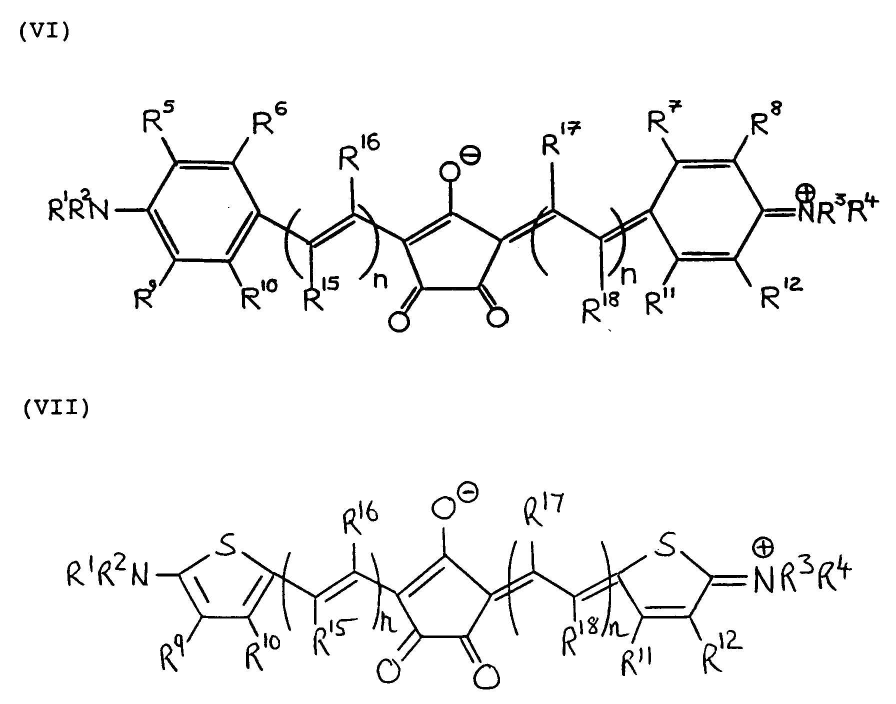 in which:
each B' independently represents the atoms necessary to complete a group represented by B,
R⁵ to R¹² and R¹⁵ to R¹⁸ each independently represent hydrogen or a substituent of the type known in polymethine dye chemistry; or two or more of R¹, R⁵ and R⁶, two or more of R², R⁹ and R¹⁰, two or more of R³, R⁷ and R⁸ and/or two or more of R⁴, R¹¹ and R¹² may together independently represent the atoms necessary to complete a heterocyclic ring or fused ring nucleus,
each R¹³ independently represents an alkyl or aryl group, and
n, R¹, R², R³ and R⁴ are as defined in Claim 3.

6. A donor element as claimed in Claim 5 in which the croconium dye has a nucleus of general formula (V) : 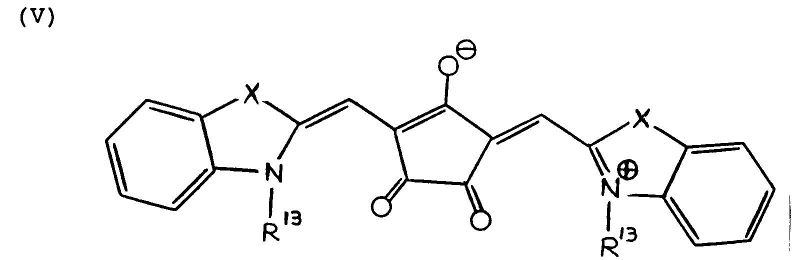 in which;
X represents O, S, Se =C(R¹⁴)₂ or =NR¹⁴ where R¹⁴ represents an alkyl or aryl group, and
R¹³ is as defined in Claim 6.

7. A donor element as claimed in any preceding Claim in which the croconium dye has a peak absorption in the wavelength range 600 to 1070nm and is present in an amount sufficient to provide the donor layer with a transmission optical density of at least 0.5 absorbance units at the wavelength of the exposing radiation.

8. A donor element as claimed in Claim 7 in which the croconium dye has a peak absorption in the wavelength range 750 to 980nm and is present in an amount sufficient to provide the donor layer with a transmission optical density of at least 1.0 absorbance units.

9. A donor element as claimed in any preceding Claim in which the donor layer comprises sequentially repeating areas of cyan, yellow, magenta and optionally black colourants.

10. The combination of a donor element as claimed in any preceding Claim and a receptor for said thermally transferable colourant.

11. A method of thermal transfer imaging, which method comprises:
(a) assembling a donor element as claimed in any one of Claims 1 to 9 and a receptor for thermally transferred colourant such that the donor layer of the donor element is in intimate, face-to-face contact with the receptor, and
(b) imagewise exposing the assembled donor element and receptor, to effect thermal transfer of colourant from the donor element to the receptor in an imagewise fashion.

12. A method as claimed in Claim 11 in which the source of exposing radiation is a laser scanning exposure source.

13. A method as claimed in Claim 10 or Claim 11 in which the donor layer of the donor element comprises sequentially repeating areas of cyan, yellow, magenta and optionally black colourants and the exposure is repeated sequentially for each colour so as to obtain a three or four colour transfer image.

## Patentansprüche

1. Donorelement für Bilderzeugung durch thermische Diffusionsübertragung mit einer Donorschicht, umfassend ein thermisch übertragbares Färbemittel und einen Strahlungsabsorber, dadurch gekennzeichnet, daß der Strahlungsabsorber ein Krokoniumfarbstoff ist.

2. Donorelement gemäß Anspruch 1, dadurch gekennzeichnet, daß der Krokoniumfarbstoff einen Kern der allgemeinen Formel (I) hat: 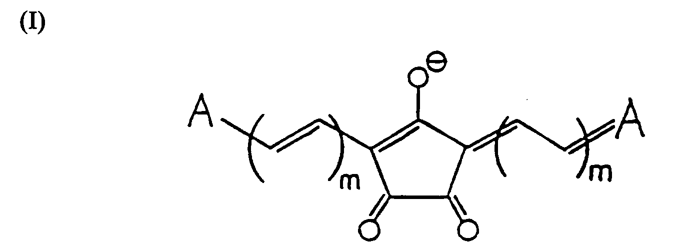 in der:
jedes A unabhängig einen carbocyclischen oder heterocyclischen Ring oder kondensierten Ringkern oder eine andere derartige, auf dem Fachgebiet der Polymethinfarbstoffchemie bekannte Endgruppe darstellt, und
jedes m unabhängig 0, 1 oder 2 ist.

3. Donorelement gemäß Anspruch 1 oder Anspruch 2, bei dem der Krokoniumfarbstoff einen Kern der allgemeinen Formel (II) oder (III) hat: 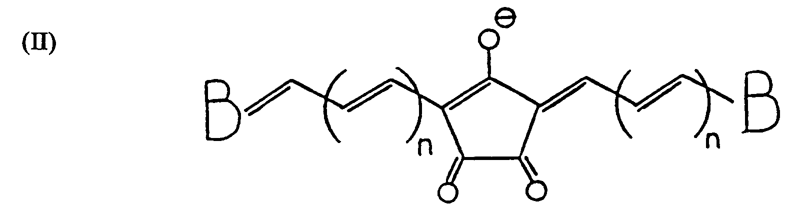 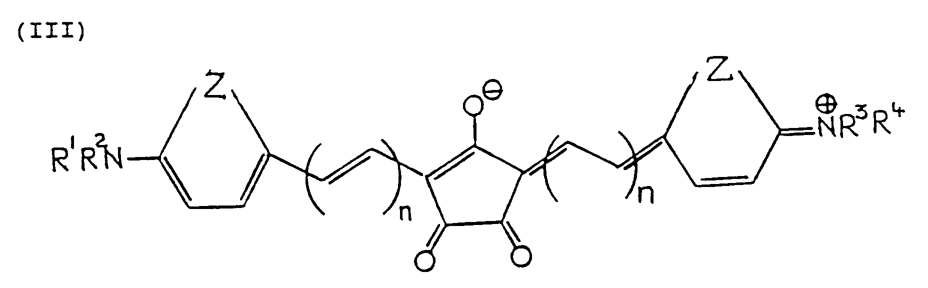 in denen:
jedes B unabhängig aus heterocyclischen Ring- und kondensierten Ringkernen des Typs, der in der Cyaninfarbstoffchemie bekannt ist, ausgewählt wird,
jedes Z unabhängig die Atome darstellt, die notwendig sind, um einen 5- oder 6-gliedrigen aromatischen oder heterocyclischen Ring zu vervollständigen,
jedes n unabhängig 0 oder 1 ist, und
R¹ bis R⁴ jeweils unabhängig aus Alkyl- und Arylresten ausgewählt werden; oder R¹ und R² zusammen und/oder R³ und R⁴ zusammen unabhängig die Atome darstellen können, die notwendig sind, um einen heterocyclischen Ring oder kondensierten Ringkern zu vervollständigen.

4. Donorelement gemäß Anspruch 3, in dem jedes B unabhängig aus Oxazolium-, Thiazolium-, Selenazolium-, Benzoxazolium-, Benzothiazolium-, Benzoselenazolium-, Naphthoxazolium-, Naphthothiazolium-, Naphthoselenazolium-, 2-Chinolinium-, 4-Chinolinium-, Isochinolinium-, Pyridinium-, 3H-Indolium-, Naphthindolium-, Imidazopyridazinium-, Benzimidazolium-, Imidazolium- und Thiodiazolium-Gruppen ausgewählt wird.

5. Donorelement gemäß Anspruch 3, bei dem der Krokoniumfarbstoff die allgemeine Formel (IV), (VI) oder (VII) hat 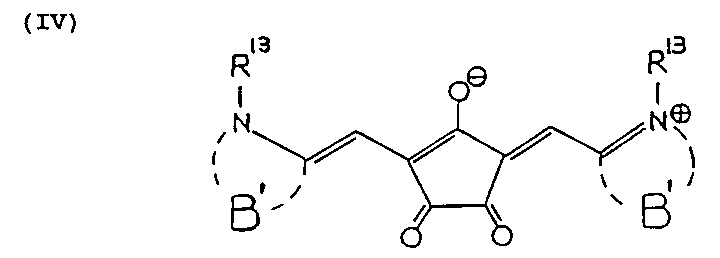 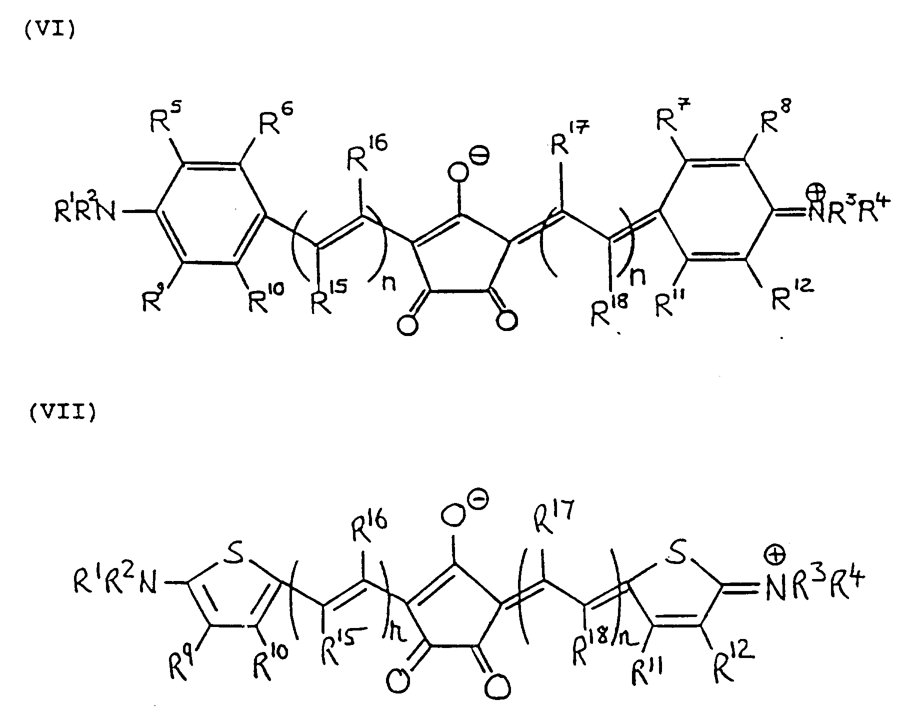 in denen:
jedes B' unabhängig die Atome darstellt, die notwendig sind, um eine durch B dargestellte Gruppe zu vervollständigen,
R⁵ bis R¹² und R¹⁵ bis R¹⁸ jeweils unabhängig ein Wasserstoffatom oder einen Substituenten des Typs darstellen, der in der Polymethinfarbstoffchemie bekannt ist; oder zwei oder mehr von R¹, R⁵ und R⁶, zwei oder mehr von R², R⁹ und R¹⁰, zwei oder mehr von R³, R⁷ und R⁸ und/oder zwei oder mehr von R⁴, R¹¹ und R¹² zusammen unabhängig die Atome darstellen können, die notwendig sind, um einen heterocyclischen Ring oder kondensierten Ringkern zu vervollständigen,
jedes R¹³ unabhängig einen Alkyl- oder Arylrest darstellt und
n, R¹, R², R³ und R⁴ die in Anspruch 3 angegebene Bedeutung haben.

6. Donorelement gemäß Anspruch 5, bei dem der Krokoniumfarbstoff einen Kern der allgemeinen Formel (V) hat: 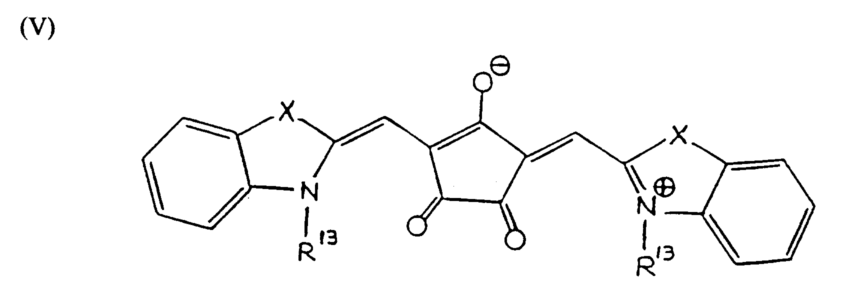 in der:
X O, S, Se, =C(R¹⁴)₂ oder =NR¹⁴ darstellt, wobei R¹⁴ einen Alkyl- oder Arylrest darstellt und
R¹³ die in Anspruch 6 angegebene Bedeutung hat.

7. Donorelement gemäß einem der vorhergehenden Ansprüche, in dem der Krokoniumfarbstoff einen Absorptionspeak in dem Wellenlängenbereich von 600 bis 1070 nm hat und in einer Menge vorhanden ist, die ausreicht, um die Donorschicht mit einer optischen Transmissionsdichte von mindestens 0,5 Absorptionseinheiten bei der Wellenlange der belichtenden Strahlung zu versorgen.

8. Donorelement gemäß Anspruch 7, bei dem der Krokoniumfarbstoff einen Absoptionspeak in dem Wellenlängenbereich von 750 bis 980 nm hat und in einer Menge vorhanden ist, die ausreichend ist, um die Donorschicht mit einer optischen Transmissionsdichte von mindestens 1,0 Absorptionseinheiten zu versorgen.

9. Donorelement gemäß einem der vorhergehenden Ansprüche, bei dem die Donorschicht aufeinanderfolgend sich wiederholende Bereiche von cyanfarbenen, gelben, magentafarbenen und gegebenenfalls schwarzen Färbemitteln umfaßt.

10. Kombination eines Donorelementes gemäß einem der vorhergehenden Ansprüche und eines Empfängers für das thermisch übertragbare Färbemittel.

11. Verfahren zur Bilderzeugung durch thermische Übertragung, umfassend:
(a) Anordnung eines Donorelementes gemäß einem der Ansprüche 1 bis 9 und eines Empfängers für ein thermisch übertragenes Färbemittel, derart, daß die Donorschicht des Donorelements in engem direktem Kontakt mit dem Empfänger ist, und
(b) bildmäßige Belichtung der Anordnung des Donorelements und des Empfängers, um die thermische Übertragung eines Färbemittels von dem Donorelement zum Empfänger in einer bildmäßigen Weise bewirken.

12. Verfahren gemäß Anspruch 11, bei dem die Quelle der belichtenden Strahlung eine Belichtungsquelle mit Laserabtastung ist.

13. Verfahren gemäß Anspruch 10 oder 11, bei dem die Donorschicht des Donorelements aufeinanderfolgend sich wiederholende Bereiche von cyanfarbenen, gelben, magentafarbenen und gegebenenfalls schwarzen Färbemitteln umfaßt und die Belichtung aufeinanderfolgend für jede Farbe wiederholt wird, um so ein drei- oder vierfarbiges Übertragungsbild zu erhalten.

## Revendications

1. Elément donneur pour la formation d'images par transfert par diffusion thermique comportant une couche de donneur comprenant une matière colorante transférable thermiquement et un absorbeur de rayonnement, caractérisé en ce que l'absorbeur de rayonnement est un colorant de croconium.

2. Elément donneur suivant la revendication 1, caractérisé en ce que le colorant de croconium comporte un noyau de la formule générale (I) : 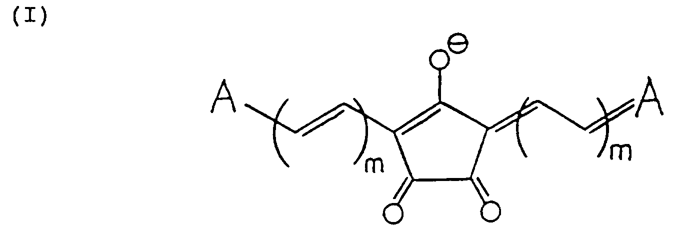 dans laquelle :
chaque A représente indépendamment un carbocycle ou hétérocycle ou un noyau à cycles condensés ou tout autre groupe terminal de ce type connu en pratique dans la chimie des colorants de polyméthine, et
chaque m représente indépendamment 0, 1 ou 2.

3. Elément donneur suivant l'une ou l'autre des revendications 1 et 2, dans lequel le colorant de croconium comporte un noyau de la formule générale (II) ou (III) : 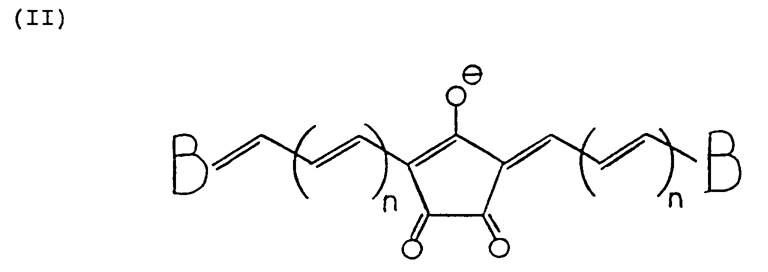 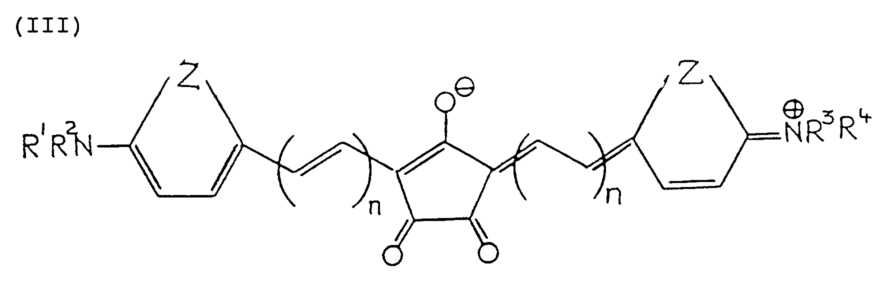 formules dans lesquelles :
chaque B est choisi indépendamment parmi les hétérocycles et les noyaux à cycles condensés du type connu dans la chimie des colorants de cyanine,
chaque Z représente indépendamment les atomes nécessaires pour former un cycle aromatique ou hétérocycle pentagonal ou hexagonal,
chaque n représente indépendamment 0 ou 1, et
R¹ à R⁴ sont chacun choisis indépendamment parmi les groupes alkyle et aryle, ou bien R¹ et R² ensemble et/ou R³ et R⁴ ensemble peuvent représenter indépendamment les atomes nécessaires pour former un hétérocycle ou un noyau à cycles condensés.

4. Elément donneur suivant la revendication 3, dans lequel chaque B est choisi indépendamment parmi les groupes oxazolium, thiazolium, sélénazolium, benzoxazolium, benzothiazolium, benzosélénazolium, naphtoxazolium, naphtothiazolium, naphtosélénazolium, 2-quinoléinium, 4-quinoléinium, isoquinoléinium, pyridinium, 3H-indolium, naphtindolium, imidazopyridazinium, benzimidazolium, imidazolium et thiodiazolium.

5. Elément donneur suivant la revendication 3, dans lequel le colorant de croconium a la formule générale (IV), (VI) ou (VII) : 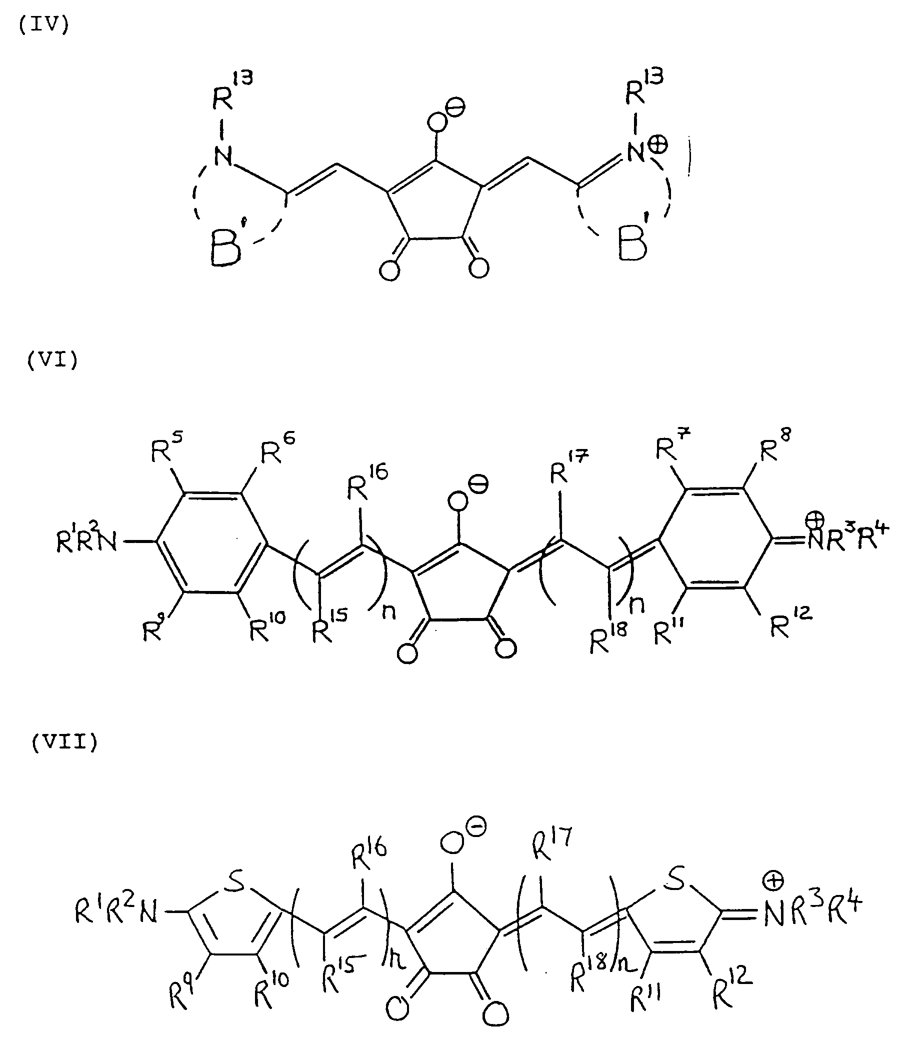 formules dans lesquelles :
chaque B' représente indépendamment les atomes nécessaires pour former un groupe représenté par B,
R⁵ a R¹² et R¹⁵ à R¹⁸ représentent chacun indépendamment de l'hydrogène ou un substituant du type connu dans la chimie des colorants de polyméthine, ou bien deux ou plusieurs des R¹, R⁵ et R⁶, deux ou plusieurs des R², R⁹ et R¹⁰, deux ou plusieurs des R³, R⁷ et R⁸ et/ou deux ou plusieurs des R⁴, R¹¹ et R¹² peuvent ensemble représenter indépendamment les atomes nécessaires pour former un hétérocycle ou un noyau à cycles condensés,
chaque R¹³ représente indépendamment un groupe alkyle ou aryle, et
n, R¹, R², R³ et R⁴ sont tels que définis à la revendication 3.

6. Elément donneur suivant la revendication 5, dans lequel le colorant de croconium comporte un noyau de la formule générale (V) : 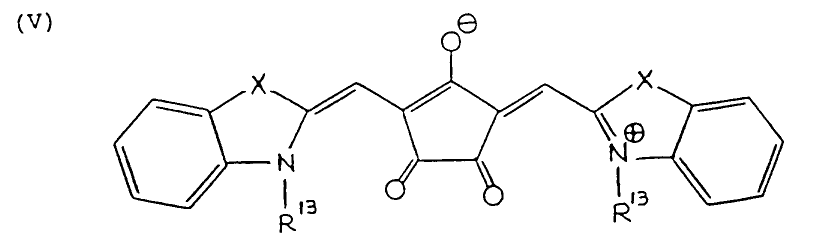 dans laquelle :
X représente O, S, Se, =C(R¹⁴)₂ ou =NR¹⁴ où R¹⁴ représente un groupe alkyle ou aryle, et
R¹³ est tel que défini à la revendication 6.

7. Elément donneur suivant l'une quelconque des revendications précédentes, dans lequel le colorant de croconium présente une absorption maximale dans la gamme des longueurs d'onde de 600 à 1070 nm et est présent en une quantité suffisante pour conférer à la couche de donneur une densité optique de transmission d'au moins 0,5 unité d'absorption à la longueur d'onde du rayonnement d'exposition.

8. Elément donneur suivant la revendication 7, dans lequel le colorant de croconium a une absorption maximale dans la gamme des longueurs d'onde de 750 à 980 nm et est présent en une quantité suffisante pour conférer à la couche de donneur une densité optique de transmission d'au moins 1,0 unité d'absorption.

9. Elément donneur suivant l'une quelconque des revendications précédentes, dans lequel la couche de donneur comprend successivement des zones répétées de matières colorantes cyan, jaune, magenta et éventuellement noire.

10. Combinaison d'un élément donneur suivant l'une quelconque des revendications précédentes et d'un récepteur pour la matière colorante transférable thermiquement précitée.

11. Procédé de formation d'images par transfert thermique, lequel procédé comprend :
(a) l'assemblage d'un élément donneur suivant l'une quelconque des revendications 1 à 9 et d'un récepteur pour une matière colorante transférée thermiquement de telle sorte que la couche de donneur de l'élément donneur soit en contact face à face, intime avec le récepteur, et
(b) l'exposition selon un mode de formation d'une image de l'élément donneur et du récepteur assemblés, pour effectuer le transfert thermique de matière colorante de l'élément donneur au récepteur d'une manière propre à former une image.

12. Procédé suivant la revendication 11, dans lequel la source de rayonnement d'exposition est une source d'exposition à balayage laser.

13. Procédé suivant l'une ou l'autre des revendications 10 et 11, dans lequel la couche de donneur de l'élément donneur comprend successivement des zones répétées de matières colorantes cyan, jaune, magenta et éventuellement noire et l'exposition est répétée successivement pour chaque couleur de manière à maintenir une image de transfert à trois ou quatre couleurs.
